# EUROPEAN PATENT APPLICATION

(11) **EP 4 734 484 A1**
(43) Date of publication of application: **29.04.2026**
(21) Application number: 24852075.1
(22) Date of filing: 02.07.2024
(51) Int. Cl.: H04L 67/1008, H04L 67/148, H04L 67/141, H04L 67/1023, H04L 67/101, H04L 67/1031, H04L 41/0695

(54) **METHOD FOR TRANSFERRING SCTP ASSOCIATION IN RADIO ACCESS NETWORK AND ELECTRONIC DEVICE FOR PERFORMING TRANSFER METHOD**

(30) Priority: 09.08.2023 KR 20230104368; 28.12.2023 KR 20230195355
(71) Applicant: Samsung Electronics Co., Ltd., Suwon-si, Gyeonggi-do 16677 (KR)
(72) Inventor: KIM, Seohyang, Suwon-si, Gyeonggi-do 16677 (KR); SEO, Jihwan, Suwon-si, Gyeonggi-do 16677 (KR); KIM, Seungmo, Suwon-si, Gyeonggi-do 16677 (KR); KWON, Joonhwan, Suwon-si, Gyeonggi-do 16677 (KR)
(74) Representative: Appleyard Lees IP LLP
(86) International application number: PCT/KR2024/009317
(87) International publication number: WO 2025/033719

(57) **Abstract**

The disclosure relates to a technology to perform functions of a radio network access network. According to an embodiment of the present disclosure, included are obtaining SCTP association information of the plurality of backend servers and status information of the plurality of backend servers from the plurality of backend servers; identifying whether to perform transfer for a first backend server among the plurality of backend servers based on the obtained SCTP association information and status information; identifying at least one second backend server, to which SCTP associations of the first backend server are to be transferred, based on the identifying of whether the transfer is required, and the obtained SCTP association information and status information; and distributing the SCTP associations of the first backend server to the at least one identified second backend server based on a certain distribution criterion.

## Description

### Technical Field

Embodiments of the present disclosure relate to a method of transferring stream control transmission protocol (SCTP) associations in a wireless access network and an electronic device for performing the method of transferring the SCTP associations.

### Background Art

In a fifth generation (5G) radio access network (RAN) system, processing of control signals and data signals may be performed in a centralized unit (CU) or a distributed unit (DU) for dealing with user data transmission and reception.

The CU may separate and perform a control function, which used to be handled by a base station in the existing 4G, and may generally perform the control function on Layer 3 or higher. The DU may perform functions of processing L1 to L3, and perform resource management and a function of converting an analog signal received from a radio unit (RU) to a digital signal.

In a virtualized RAN (vRAN) system, virtualization of a RAN may be performed by software-oriented conversion from the vendor and hardware in the traditional RAN and separation of each architecture in a case that the vRAN system is used by virtualizing the DU or the CU to a virtualized DU or a virtualized CU.

### Disclosure of Invention

### Solution to Problem

In an embodiment, a method of transferring stream control transmission protocol (SCTP) associations of a plurality of backend servers in a radio access network system includes obtaining SCTP association information of the plurality of backend servers and status information of the plurality of backend servers from the plurality of backend servers; identifying whether to perform transfer for a first backend server among the plurality of backend servers based on the obtained SCTP association information and status information; identifying at least one second backend server, to which SCTP associations of the first backend server are to be transferred, based on the identifying of whether the transfer is required, and the obtained SCTP association information and status information; and distributing the SCTP associations of the first backend server to the at least one identified second backend server based on a certain distribution criterion.

In an embodiment, a computer-readable recording medium may include one or more program codes. The one or more program codes performs, when executed in an electronic device, obtaining SCTP association information of a plurality of backend servers and status information of the plurality of backend servers from the plurality of backend servers; identifying whether to perform transfer for a first backend server among the plurality of backend servers based on the obtained SCTP association information and status information; identifying at least one second backend server, to which SCTP associations of the first backend server are to be transferred, based on the identifying of whether the transfer is required, and the obtained SCTP association information and status information; and distributing the SCTP associations of the first backend server to the at least one identified second backend server based on a certain distribution criterion.

In an embodiment of the present disclosure, an electronic device may include memory storing one or more instructions; and at least one processor configured to execute the one or more instructions stored in the memory. The at least one processor may be configured to obtain SCTP association information of the plurality of backend servers and status information of the plurality of backend servers from the plurality of backend servers. The at least one processor may be configured to identify whether transfer for a first backend server among the plurality of backend servers is required based on the obtained SCTP association information and status information. The at least one processor may be configured to identify at least one second backend server, to which SCTP associations of the first backend server are to be transferred, based on the identifying of whether the transfer is required, and the obtained SCTP association information and status information. The at least one processor may be configured to distribute the SCTP associations of the first backend server to the at least one identified second backend server based on a certain distribution criterion.

### Brief Description of Drawings

FIG. 1 illustrates SCTP associations between clients and backend servers, according to an embodiment of the present disclosure.
FIG. 2 illustrates clients, a network, and an electronic device for transferring SCTP associations between the clients and backend servers, according to an embodiment of the present disclosure.
FIG. 3 illustrates clients, a network, and an electronic device for transferring SCTP associations between the clients and backend servers, according to an embodiment of the present disclosure.
FIG. 4 illustrates a procedure for transferring an SCTP association, according to an embodiment of the present disclosure.
FIG. 5 illustrates clients, a network, and an electronic device for transferring SCTP associations between the clients and backend servers, which is located in a load balancer, according to an embodiment of the present disclosure.
FIG. 6 illustrates clients, a network, and an electronic device for transferring SCTP associations between the clients and backend servers, whose functions are distributed in a load balancer and the backend server, according to an embodiment of the present disclosure.
FIG. 7 is a flowchart illustrating a method of transferring SCTP associations, according to an embodiment of the present disclosure.
FIG. 8 illustrates an electronic device for transferring SCTP associations, according to an embodiment of the present disclosure.

### Mode for the Invention

Throughout the present disclosure, the expression "at least one of a, b or c" indicates only a, only b, only c, both a and b, both a and c, both b and c, all of a, b, and c, or variations thereof.

The terms as herein used are selected as common terms widely used now, taking into account principles of the present disclosure, which may however depend on intentions of those of ordinary skill in the art, judicial precedents, emergence of new technologies, and the like. Some terms as herein used are selected at the applicant's discretion, in which case, the terms will be explained later in detail in connection with embodiments of the present disclosure. Therefore, the terms should be defined based on their meanings and descriptions throughout the disclosure.

As used herein, the singular forms "a", "an" and "the" are intended to include the plural forms as well, unless the context clearly indicates otherwise. All terms including technical and scientific terms used herein have the same meaning as commonly understood by one of ordinary skill in the art to which this disclosure belongs. Terms including ordinal numbers like 'first', 'second', etc., may be used to indicate various components, but the components should not be restricted by the terms. These terms are used to distinguish one element from another.

The term "include (or including)" or "comprise (or comprising)" is inclusive or open-ended and does not exclude additional, unrecited elements or method steps. The terms "unit", "module", "block", etc., as used herein each represent a unit for handling at least one function or operation, and may be implemented in hardware, software, or a combination thereof.

Embodiments of the present disclosure will now be described in detail with reference to accompanying drawings to be readily practiced by those of ordinary skill in the art. However, the embodiments of the present disclosure may be implemented in many different forms, and not limited thereto. In the drawings, parts unrelated to the description are omitted for clarity, and like numerals refer to like elements throughout the specification. Furthermore, reference numerals are merely used to describe the respective drawings, and different reference numerals used in different drawings are not intended to indicate different elements.

Throughout the specification, when A is said to "be connected" to B, it means to be "directly connected" to B or "electrically connected" to B with C located between A and B. In the disclosure, the terms "transmit", "receive" and "communicate" imply both direct and indirect communication. The term "include (or including)" or "comprise (or comprising)" is inclusive or open-ended and does not exclude additional, unrecited elements or method steps, unless stated otherwise.

Throughout the specification, the expression "or" is inclusive rather than exclusive, unless specifically mentioned otherwise. Hence, unless the context clearly indicates otherwise, "A or B" may refer to "A", "B" or both. In the present disclosure, the expression "at least one of" or "one or more" may indicate different combinations of one or more of items enumerated or may refer to an occasion when an arbitrary one of the items enumerated is required. For example, "at least one of A, B, and C" may include any of the following combinations: A, B, C, A and B, A and C, B and C, or A, B and C.

In an embodiment of the present disclosure, "connection relationship" may include a meaning of "access relationship", "inclusion relationship", "attachment relationship" or "matching relationship". For example, "connected" may include a meaning of "accessing", "included in", "attached" or "matched". In an embodiment of the present disclosure, "connection" may include a meaning of availability of wired/wireless data communication. For example, "A and B being connected" may include a meaning of availability of data communication between A and B, i.e., availability of data transmission/reception with each other.

A "controller" may refer to any device, system or part of them for controlling at least one operation. The controller may be implemented in hardware, a combination of hardware and software, or firmware. Functions associated with a particular controller may be centralized or distributed locally or remotely.

In the present disclosure, stream control transmission protocol (SCTP) is part of Internet protocol, which may be a protocol for providing reliable and message-oriented communication by combining functions of transmission control protocol (TCP) and user datagram protocol (UDP).

In the present disclosure, the term "SCTP association" may refer to a connection between a client and a server for enabling communication by using the SCTP. For example, when an SCTP association is established between a client and a server, the client and the server may perform communication in SCTP and exchange data.

In the present disclosure, the term "migration" may refer to migrating an SCTP association between a client and a server to an SCTP association between the client and another server. Furthermore, the term "migration" may be replaced or interchangeably used with "transfer" or "transition".

In the present disclosure, the term "source server" may refer to a server, from which the SCTP association is to be transferred as there is a problem in the server. For example, the source backend server may refer to one of backend servers, from which the SCTP association of the server is to be transferred as there is a problem in the backend server.

In the present disclosure, the term "target server" may refer to a server, to which the SCTP association is to be transferred from the source server. For example, the target backend server may refer to one of backend servers, to which the SCTP association of the source backend server is to be transferred from the source backend server.

In the present disclosure, the expression "providing a service" may refer to a server performing a task (or operation) such as data processing, information search, transaction processing, etc., requested by a client. It may refer to the server providing a high-end service for the client through a reliable and efficient network protocol by performing an operation requested by a client SCTP-associated to the server

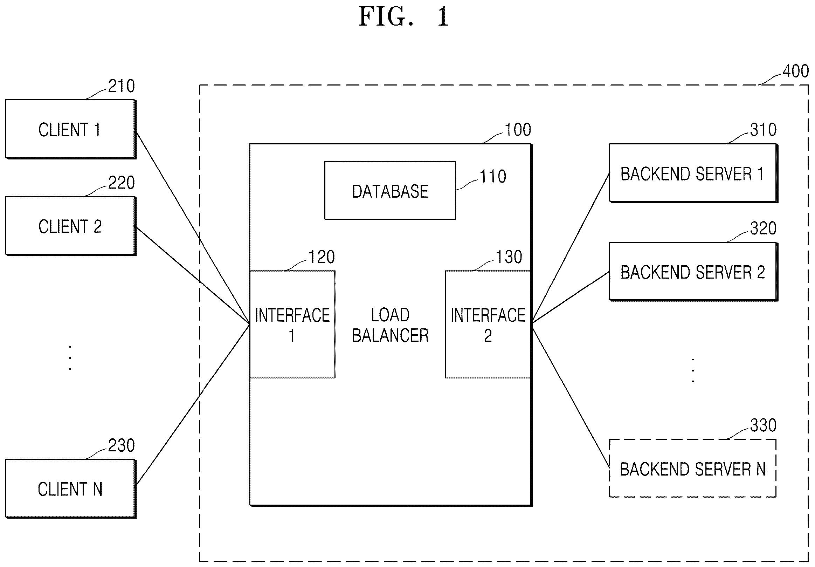

FIG. 1 illustrates SCTP associations between clients and backend servers, according to an embodiment of the present disclosure.

Referring to FIG. 1, a load balancer 100 may manage SCTP associations between a plurality of clients including client 1 210 to client N 230 and backend servers 1 310 to N 330. In an embodiment, the load balancer 100 is a device or software that is in charge of traffic distribution in an Internet service or internal network, and may serve to uniformly distribute a request to multiple servers to prevent a server or database system from being overload.

In the present disclosure, one backend server may perform data processing based on one SCTP association or one backend server may perform data processing based on thousands or tens of thousands or more of SCTP associations.

In an embodiment, the plurality of clients 210, 220, ..., 230 may be any devices or applications capable of communicating with the plurality of backend servers 310, 320, ..., 330, and may serve to request a service or data. For example, the plurality of clients 210, 220, ..., 230 may include at least one of a virtualized distributed unit (vDU), an access and mobility management function (AMF), an evolved NodeB (eNB), a next-generation NodeB (gNB), or virtualized centralized unit user plane (vCU-UP).

In the present disclosure, the vDU and the vCU-UP are described by assuming a v-RAN in which all the components are virtualized, but at least one client may include a non-virtualized distributed unit (DU) and a non-virtualized centralized unit user plane (CU-UP). Furthermore, the at least one client may include a device in a 3GPP standard document, which requests a service and data from the plurality of backend servers 310, 320, ..., 330.

In an embodiment, the plurality of backend servers 310, 320, ..., 330 may perform a function of a call processing module. For example, the plurality of backend servers 310, 320, ..., 330 may receive packets and perform various services including communicative connection management, providing of a communication service, quality management and erroneous and abnormal condition management.

In an embodiment, a local area network 400 may include the load balancer 100 and the plurality of backend servers 310, 320, ..., 330. Although the load balancer 100 is described as being included in the local area network 400 in the present disclosure for convenience of explanation, the position of the load balancer 100 is not limited thereto. For example, the load balancer 100 may be located outside the local area network 400, and only a portion of the load balancer 100 may be located in the local area network 400. For example, only interface 2 130 of the load balancer 100 may be located in the local area network 400 while a database 110 and interface 1 120 of the load balancer 100 may be located outside the local area network 400.

In an embodiment of the present disclosure, the load balancer 100 may include the database 110, interface 1 120 and interface 2 130. In an embodiment, the load balancer 100 may serve to create or maintain associations between the plurality of clients 210, 220, ..., 230 and the plurality of backend servers 310, 320, ..., 330 by receiving association requests from the plurality of clients 210, 220, ..., 230 and distributing associations to the plurality of backend servers 310, 320, ..., 330.

In an embodiment, the database 110 may store information about which one of the plurality of backend servers 310, 320, ..., 330 performs data processing based on the SCTP association and network address translation (NAT) information relating to the association.

In an embodiment, NAT is a network function for converting an Internet protocol (IP) address to another IP address, which may be a technology for several local network devices to share a common IP address to make connection. NAT may be used to preserve an IP address and manage security, privacy and network.

In an embodiment, IPs used in the local area network 400 may all be recognized as an IP of interface 1 120 of the load balancer 100 outside the local area network 400. Hence, the plurality of clients 210, 220, ..., 230 are not aware of which backend server is associated with the client itself in SCTP, but may recognize as being associated with the IP of interface 1 120 in SCTP.

Source IPs and target IPs of packets will now be described when client 1 210 is associated with backend server 1 310 in SCTP.

The load balancer 100 may NAT-process a target IP of packets received from client 1 210 through interface 1 120 to an IP of backend server 1 310, and transmit the received packet to the backend server 1 310. A source IP of the packet received by backend server 1 310 may be an IP of client 1 210 that transmits the packet. A packet transmitted by backend server 1 310 to a client associated in SCTP may undergo NAT processing while passing the load balancer 100, and a source IP of the packet may be converted from the IP of backend server 1 310 to an IP of interface 1 120 and forwarded to client 1 210.

In this case, as the SCTP association state may be determined based on the packet IP, client 1 210 may determine as being SCTP-associated with interface 1 120 of the load balancer 100, and backend server 1 310 may determine as being SCTP-associated with client 1 210. In an embodiment, the load balancer 100 may use the database 110 to serve to create and manage SCTP associations between the plurality of clients 210, 220, ..., 230 and the plurality of backend servers 310, 320, ..., 330 through packet transmission and reception operations of interface 1 120 and interface 2 130.

In the network connection structure, when a certain backend server among the plurality of backend servers 310, 320, ..., 330 has a problem or is overloaded and thus, has a difficulty in providing a service from the backend server through the SCTP association, the SCTP association served from the server may need to be transferred to another backend server.

When a network device performs the transfer of the SCTP association through direct communication, extra traffic required for coordination of the transfer of the SCTP association may be additionally generated, thereby consuming a lot of time. Furthermore, when thousands or tens of thousands of SCTP associations performed by a backend server need to be transferred, network overload may occur.

Hence, there is a need for a method for performing the transfer of massive SCTP associations at a time and in a short time.

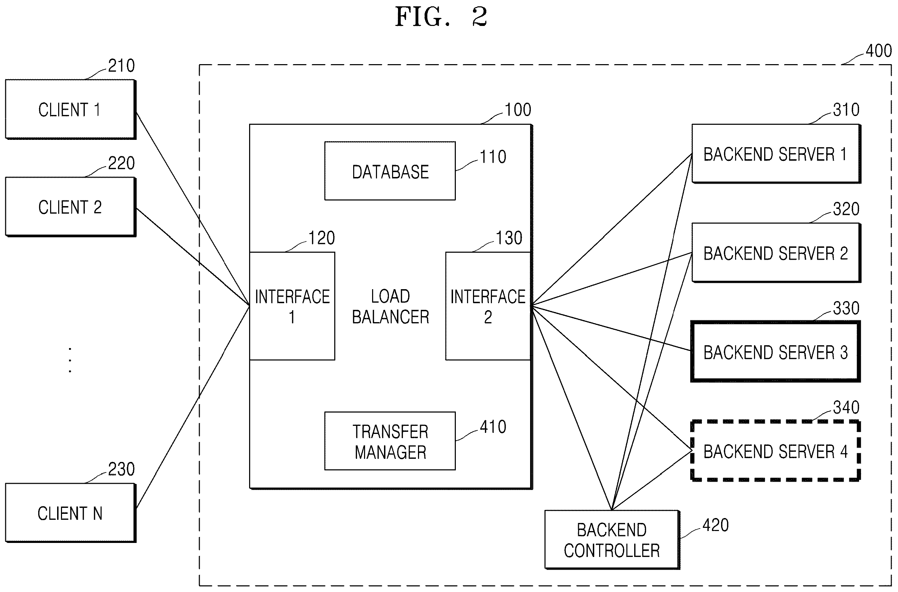

FIG. 2 illustrates clients, a network, and an electronic device for transferring SCTP associations between the clients and backend servers, according to an embodiment of the present disclosure.

In describing FIG. 2, descriptions overlapping those of FIG. 1 may not be repeated.

Referring to FIG. 2, the plurality of clients 210, 220, ..., 230 may be connected to the load balancer 100 to perform data communication with the plurality of backend servers 310, 320, 330 and 340 included in the local area network 400 through SCTP associations. Although the load balancer 100 is described as being included in the local area network 400 in the present disclosure for convenience of explanation, the position of the load balancer 100 is not limited thereto. For example, the load balancer 100 may be located outside the local area network 400, and only a portion of the load balancer 100 may be located in the local area network 400. For example, only interface 2 130 of the load balancer 100 may be located in the local area network 400 while a database 110 and interface 1 120 of the load balancer 100 may be located outside the local area network 400.

In an embodiment, the plurality of clients 210, 220, ..., 230, the load balancer 100 and the plurality of backend servers 310, 320, 330 and 340 may perform the functions and roles as described in FIG. 1.

An electronic device according to an embodiment of the present disclosure may include a transfer manager 410 and a backend controller 420. In FIG. 2, for convenience of explanation, the transfer manager 410 is located in the load balancer 100, and the backend controller 420 is located in the local area network 400, without being limited thereto. For example, the electronic device including the transfer manager 410 and the backend controller 420 may be located outside the load balancer 100 as a separate device.

In an embodiment of the present disclosure, the backend controller 420 may receive, from backend server 1 310, backend server 2 320, backend server 3 330 and backend server 4 340, status information of the backend server including at least one of SCTP association status information, information about CPU usage, information about memory usage, an abnormal state of the backend server and whether the backend server has a failure. For example, the information may be received by the backend controller 420 periodically or aperiodically.

In an embodiment of the present disclosure, the backend controller 420 may determine whether a transfer for backend server 4 340 is to be performed among the plurality of backend servers 310, 320, 330 and 340, based on the received status information of the plurality of backend servers 310, 320, 330 and 340.

For example, the backend controller 420 may identify an SCTP association transfer condition including an occasion when backend server 4 340 has a problem and is thus unable to provide a service to a client, an occasion when backend server 4 340 needs to be reinitiated after terminated, an occasion when backend server 4 340 needs to be repaired and is thus determined as being unavailable for a long time or an occasion when traffic equal to or more than certain reference traffic occurs, and determine the backend server 4 340 as a first server, a source backend server of the SCTP association transfer.

In the present disclosure, the source backend server is a backend server that is not temporarily or continuously operated because of having a problem, including a backend server from which the SCTP association is to be transferred. In other words, the source backend server may include a backend server that originally has the SCTP association but needs to transfer the SCTP association to another backend server. The source backend server is a device that plays the role, and is not limited to the term.

In an embodiment of the present disclosure, the backend controller 420 may send backend server 4 340 a command to terminate a service to the client associated in SCTP. Furthermore, the backend controller 420 may send the transfer manager 410 status information of backend server 4 340, status information of backend server 1 310, status information of backend server 2 320, status information of backend server 3 330 and information indicating that backend server 4 340 is identified as the source backend server.

In an embodiment of the present disclosure, the transfer manager 410 may identify a target backend server, to which the SCTP associations of backend server 4 340 are to be transferred, based on the information received from the backend controller 420. For example, the transfer manager 410 may identify (or determine, select, or set) the target backend server, to which the SCTP association of backend server 4 340 are to be transferred, according to a load distribution algorithm based on information about CPU usages, memory usages and amounts of traffic of backend server 1 310, backend server 2 320 and backend server 3 330. There may be one, two or more target backend servers.

In an embodiment, the target backend server may be a server, to which the SCTP associations are to be transferred from the source backend server, including a backend server to which the SCTP associations are to be transferred. In other words, the target backend server may include a backend server, to which the SCTP associations that are owned by the source backend server are to be transferred from the source backend server. The target backend server is a device that performs the role, and is not limited to the term.

In an embodiment, the load distribution algorithm may include at least one of a random, Hashing, round-robin algorithm, a least connections algorithm, or a resource-based algorithm (e.g., an algorithm based on CPU usage or memory usage), or a well-known load distribution algorithm may be used. For example, the well-known load distribution algorithm may be an algorithm to distribute traffic based on information about an amount of traffic allocated for each backend server.

In an embodiment, the transfer manager 410 may distribute loads based on the number of SCTP associations of each backend server. For example, when the information received by the transfer manager 410 from the backend controller 420 is about the number of SCTP associations of each backend server, the number of SCTP associations of backend server 1 310 is 5000, the number of SCTP associations of backend server 2 320 is 5000, and the number of SCTP associations of backend server 3 330 is 2000, the transfer manager 410 may identify backend server 3 330 having the smallest number of SCTP associations as a second backend server, the target backend server.

In an embodiment, the transfer manager 410 may distribute loads based on the CPU usage of each backend server. For example, when the information received from the backend controller 420 is about CPU usage of each backend server, the CPU usage of backend server 1 310 is 5%, the CPU usage of backend server 2 320 is 4%, and the CPU usage of backend server 3 330 is 2%, the transfer manager 410 may identify (or determine, select, or set) backend server 3 330 having the least CPU usage as the second backend server, the target backend server.

For convenience of explanation, the transfer manager 410 is described in a way of only one piece of status information to identify the target backend server, but is not limited thereto. For example, the transfer manager 410 may identify (or determine, select, or set) the target backend server by taking into account both the number of SCTP associations and the CPU usage. For example, the transfer manager 410 may identify (or determine, select, or set) a backend server by placing a priority or weight on each information.

For example, when the information received by the transfer manager 410 from the backend controller 420 is about the number of SCTP associations of each backend server and CPU usage of each backend server, and there is a backend server having less than 3% of CPU usage, the transfer manager 410 may identify (or determine, select, or set) the backend server as the target backend server regardless of the number of SCTP associations of the backend server.

For example, assume that the CPU usage of backend server 1 310 is 5%, the number of SCTP associations of backend server 1 310 is 1,000, the CPU usage of backend server 2 320 is 4%, the number of SCTP associations of backend server 2 320 is 1,000, the CPU usage of backend server 3 330 is 1%, and the number of SCTP associations of backend server 3 330 is 3,000. In this case, the transfer manager 410 may identify (or determine, select, or set) backend server 3 330 having the most number of SCTP associations but having the least CPU usage as the target backend server.

In an embodiment, when the transfer manager 410 identifies backend server 3 330 as the target backend server, the transfer manager 410 may perform SCTP transfer by forwarding an SCTP transfer initiation (or SCTP transfer INIT) message to backend server 3 330.

Furthermore, in an embodiment, the transfer manager 410 may identify (or determine, select or set) a reinitiated SCTP association, and update the SCTP association and NAT information relating to the SCTP association stored in the database 110 into a transferred state of the SCTP association. For example, when a message for initiating an SCTP association stored in the database 110 of the load balancer 100 occurs, the transfer manager 410 may recognize the SCTP transfer initiation message as a message to reinitiate the SCTP association and update both the SCTP association and NAT information relating to the SCTP association stored in the database 110.

The SCTP association initiation message may be a message indicating that the SCTP association between the client and backend server 3 330 is initiated after completion of transferring the SCTP association to backend server 3 330.

In an embodiment, after the SCTP association initiation message and a replay message to the SCTP association initiation are exchanged between the client that has been SCTP-associated with backend server 4 340 and backend server 3 330, the transferred SCTP association may be reinitiated. The transfer manager 410 may recognize (or identify) the time when the SCTP association initiation message or SCTP INIT message is delivered to the database 110 of the load balancer 100 as a time when the SCTP association is reinitiated, and from this time, the SCTP association and NAT information relating to the SCTP association of the database 110 may be updated.

Although an occasion when the transfer manager 410 identifies one target backend server is described in FIG. 2, the transfer manager 410 may identify two or more target backend servers.

An occasion when there are two or more target backend servers will now be described as an example.

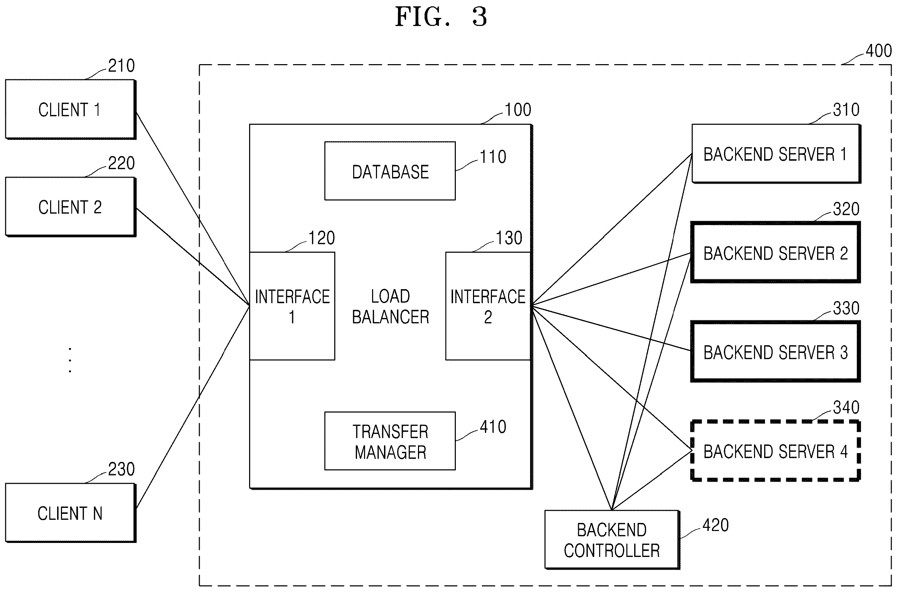

FIG. 3 illustrates clients, a network, and an electronic device for transferring SCTP associations between the clients and backend servers, according to an embodiment of the present disclosure.

In describing FIG. 3, descriptions overlapping those of FIG. 1 or FIG. 3 may not be repeated.

Referring to FIG. 3, the plurality of clients 210, 220, ..., 230 may be connected to the load balancer 100 to perform data communication with the plurality of backend servers 310, 320, 330 and 340 included in the local area network 400 through SCTP associations. Although the load balancer 100 is described as being included in the local area network 400 in the present disclosure for convenience of explanation, the position of the load balancer 100 is not limited thereto. For example, the load balancer 100 may be located outside the local area network 400, and only a portion of the load balancer 100 may be located in the local area network 400. For example, only interface 2 130 of the load balancer 100 may be located in the local area network 400 while the database 110 and interface 1 120 of the load balancer 100 may be located outside the local area network 400.

The plurality of clients 210, 220, ..., 230, the load balancer 100 and the plurality of backend servers 310, 320, 330 and 340 may perform the functions and roles as described in FIG. 1.

In an embodiment, an electronic device may include the transfer manager 410 and the backend controller 420. In FIG. 3, for convenience of explanation, the transfer manager 410 is located in the load balancer 100, and the backend controller 420 is located in the local area network 400, without being limited thereto. For example, the electronic device including the transfer manager 410 and the backend controller 420 may be located outside the load balancer 100 as a separate device.

In an embodiment, as described above in FIG. 2, the backend controller 420 may receive status information of each backend from the plurality of backend servers 310, 320, 330 and 340, and identify a source backend server from which the transfer is performed. Furthermore, the backend controller 420 may forward information about the identified source backend server and the received status information of the backend server to the transfer manager 410.

For example, in an embodiment, the transfer manager 410 may select a plurality of target backend servers to which SCTP associations are to be transferred. For example, the transfer manager 410 may select backend server 2 320 and backend server 3 330 as target backend servers based on the status information of the backend servers.

In an embodiment, the transfer manager 410 may divide SCTP associations of backend server 4 340, which is the source backend server, into multiple sets, and transfer the divided SCTP sets to the target backend servers to which the SCTP associations are to be transferred.

In an embodiment, the transfer manager 410 may distribute loads based on the number of SCTP associations of each backend server. For example, assume that the information received from the backend controller 420 is about the number of SCTP associations of each backend server, the number of SCTP associations of backend server 1 310 is 5000, the number of SCTP associations of backend server 2 320 is 3000, the number of SCTP associations of backend server 3 330 is 2000, and the number of SCTP associations of backend server 4 is 5000. In this case, the transfer manager 410 may identify backend server 2 320 and backend server 3 330 having a relatively small number of SCTP associations as target backend servers.

In this case, the transfer manager 410 may classify 3000 of 5000 SCTP associations of backend server 4 340, the source backend server into a first set and 2000 SCTP associations into a second set, and distribute the first set of SCTP associations to backend server 3 330 and the second set of SCTP associations to backend server 2 320. When the distribution of the SCTP associations of source backend server 4 340 to the target backend servers is completed, each of backend server 1 310, backend server 2 320 and backend server 3 330 has 5,000 SCTP associations, so that concentration of the SCTP associations in one backend server may be avoided.

In an embodiment, the transfer manager 410 may distribute the loads based on CPU usage of each backend server. For example, when the information received from the backend controller 420 is about CPU usage of each backend server, the CPU usage of backend server 1 310 is 5%, the CPU usage of backend server 2 320 is 4%, and the CPU usage of backend server 3 330 is 2%, the transfer manager 410 may identify backend server 2 320 and backend server 3 330 in low CPU usage order as target backend servers.

Also, in this case, the transfer manager 410 may divide SCTP associations of backend server 4 340, which is the source backend server, into multiple sets, and transfer the divided SCTP sets to the target backend servers to which the SCTP associations are to be transferred.

For convenience of explanation, the transfer manager 410 is described in a way of only one piece of status information to identify the target backend server, but is not limited thereto. For example, it is also possible that the transfer manager 410 identifies (or determines, selects, or sets) the target backend server by taking into account both the number of SCTP associations and the CPU usage. For example, the transfer manager 410 may identify (or determine, select, or set) a backend server by placing a priority or weight on each information.

For example, when the information received by the transfer manager 410 from the backend controller 420 is about the number of SCTP associations of each backend server and CPU usage of each backend server, and there is a backend server having less than 3% of CPU usage, the transfer manager 410 may identify (or determine, select, or set) the backend server as the target backend server regardless of the number of SCTP associations of the backend server.

For example, assume that the CPU usage of backend server 1 310 is 5%, the number of SCTP associations of backend server 1 310 is 1,000, the CPU usage of backend server 2 320 is 2%, the number of SCTP associations of backend server 2 320 is 2,000, the CPU usage of backend server 3 330 is 1%, and the number of SCTP associations of backend server 3 330 is 3,000. In this case, the transfer manager 410 may identify (or determine, select, or set) backend server 2 320 and backend server 3 330 having a relatively large number of SCTP associations but having less than 3% of CPU usage as the target backend servers.

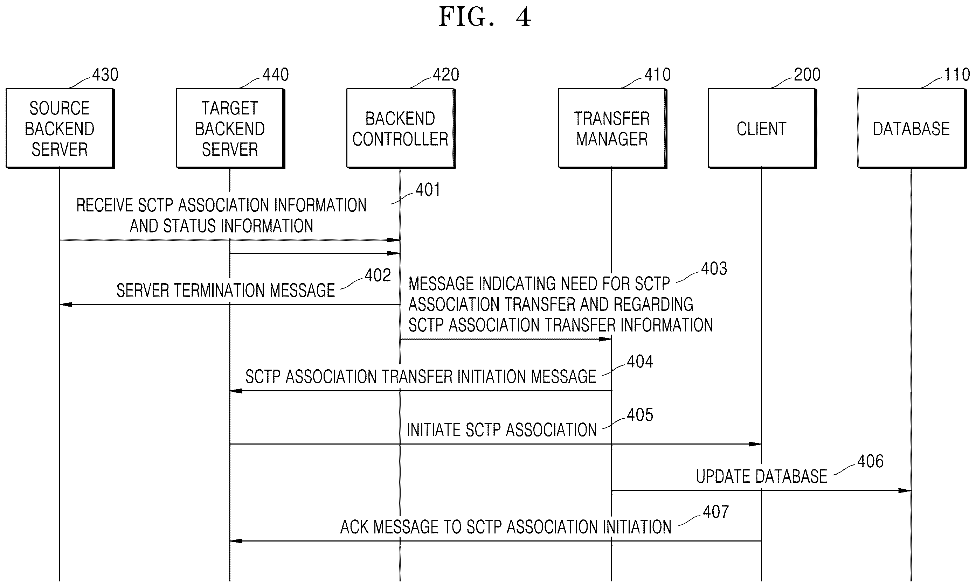

FIG. 4 illustrates a procedure for transferring an SCTP association, according to an embodiment of the present disclosure.

In describing FIG. 4, descriptions overlapping those of FIGS. 1 to 3 may not be repeated.

Referring to FIG. 4, the backend controller 420 may perform three functions (or tasks, roles, actions).

For example, a first function of the backend controller 420 (or backend controller 1 (BC-1)) may include a function of obtaining (or receiving) SCTP association information or status information of each backend server from the plurality of backend servers including a source backend server 430 and a target backend server 440.

For example, a second function of the backend controller 420 (or BC-2) may include a function of identifying (or determining, selecting or discovering) the target backend server 440 based on the SCTP association information or status information of each backend server received from the plurality of backend servers including the source backend server 430 and the target backend server 440 and of terminating a service (or data communication) to a client associated in SCTP with the target backend server 440.

For example, the SCTP association information may include the number of SCTP associations of each backend server, IP address information of each backend server, port number information, SCTP configuration setting information, security setting information and system resource information.

For example, a third function of the backend controller 420 (or BC-3) may include a function of transmitting information relating to the target backend server 440 and the source backend server 430 to the transfer manager 410 so that the transfer manager 410 performs an operation of transferring the SCTP associations.

The functions BC-1, BC-2 and BC-3 of backend controller 420 are not limited to the names, but indicate operations or functions for performing the respective functions.

In an embodiment of the present disclosure, the transfer manager 410 may perform two functions (or tasks, roles, operations, or actions).

For example, a first function of the transfer manager 410 (or migration manager 1 (MM-1)) may include a function of receiving information of the source backend server 430 and the target backend server 440 from the backend controller 420 and of identifying (or determining) the target backend server 440 and information about an SCTP association set to be transferred to the target backend server 440 based on the information of the source backend server 430 and the target backend server 440.

For example, a second function of the transfer manager 410 (or MM-2) may include a function of, when a reinitiation process is performed by the target backend server 440 and thus, a message for initiating the SCTP association that exists in the database 110 of the load balancer 100 occurs, considering this as reinitiation and updating the SCTP association information and NAT information relating to the SCTP association in the database 110.

The functions MM-1 and MM-2 of the transfer manager 410 are not limited to the names, but indicate operations or functions for performing the respective functions.

In an embodiment of the present disclosure, the plurality of backend servers including the target backend server 440 and the source backend server 430 may perform BC-1 function for transmitting in 401 the SCTP association information and status information of each backend server to the backend controller 420.

In an embodiment of the present disclosure, the backend controller 420 may identify (or determine) whether to transfer the SCTP association based on the SCTP association information or status information of each backend server received by performing BC-1 function, and identify (or determine or select) the source backend server 430 and the target backend server 440 from among the plurality of backend servers.

For example, the status information may include at least one of information about CPU usages of the plurality of backend servers, information about memory usages of the plurality of backend servers, information about amounts of traffic of the plurality of backend servers and whether the plurality of backend servers have a fault. The backend controller 420 may identify (or recognize or determine) that there is a problem in a backend server whose CPU usage is equal to or larger than a certain threshold among the plurality of backend servers, and identify (or determine) the backend server as the source backend server 430.

In an embodiment of the present disclosure, the backend controller 420 may identify (or determine) status of all the backend servers periodically or aperiodically.

For example, the backend controller 420 may receive the SCTP association information or status information from the plurality of backend servers periodically or aperiodically, accordingly identify (or determine) whether to transfer an SCTP association based on the received SCTP association information or status information of each backend server, and identify (or determine or select) the source backend server 430 from among the plurality of backend servers.

For example, the SCTP association information may include the number of SCTP associations of each backend server, IP address information of each backend server, port number information, SCTP configuration setting information, security setting information and system resource information.

For example, when the backend controller 420 identifies through the SCTP association information or status information of each backend server that all the backend servers have no fault or that too much traffic or resources are not concentrated in very few of backend servers, the backend controller 420 may not perform an extra operation. In this case, the backend controller 420 may receive the SCTP association information or status information from the plurality of backend servers periodically or aperiodically again, and at each reception, identify (or determine) whether to transfer SCTP associations.

In an embodiment of the present disclosure, the backend controller 420 may transmit a service termination message to the identified source backend server 430 in 402. For example, when it is determined that the identified source backend server 430 has a fault or the SCTP associations need to be transferred due to excessive loads, the backend controller 420 may perform BC-2 function of transmitting the service termination message in 402 not to provide a service to the client associated in SCTP with the identified source backend server 430.

On receiving the service termination message from the backend controller 420, the source backend server 430 may terminate the service being provided to the SCTP-associated client. For example, after receiving the service termination message, the source backend server 430 may not perform an operation (or task) including data processing, information processing and transaction processing requested from the SCTP-associated client.

In an embodiment of the present disclosure, the backend controller 420 may perform BC-3 function for transmitting in 403 a message indicating that the transfer of the SCTP association is required and a message including information required for the transfer of the SCTP association to the transfer manager 410. For example, the message indicating that the transfer of the SCTP association is required may be generated according to whether to transfer the SCTP association identified by the backend controller 420. For example, the information required for transferring SCTP associations may include IP address information, port number information, SCTP configuration setting information, security setting information and system resource information of the source backend server 430 that has had the existing SCTP associations, according to the transfer of SCTP associations. The information required for transferring SCTP associations is not, however, limited thereto. Information that may be determined as being required for transferring SCTP associations may be further included.

In an embodiment of the present disclosure, on receiving a message indicating the need for transferring SCTP associations and regarding SCTP association transfer information from the backend controller 420, the transfer manager 410 may identify (or compute, calculate, determine or select) a transfer method according to a distribution criterion to transfer the SCTP associations to another server. For example, the distribution criterion identified by the transfer manager 410 may include at least one of a random, Hashing, round-robin algorithm, a least connections algorithm, or a resource based algorithm.

Furthermore, in an embodiment of the present disclosure, the transfer manager 410 may identify (or select or determine) at least one target backend server 440 based on the receiving of the need for transferring SCTP associations and SCTP association transfer information. The at least one identified target backend server 440 may be one backend server or a plurality of backend servers. For example, the number of target backend servers 440 may be identified (or determined or selected) by the backend controller 420 or determined in advance.

In an embodiment, the SCTP associations may be divided (or classified) by the transfer manager 410 into at least one SCTP association set. For example, based on status information of all the target backend servers 440, at least one SCTP association set may be identified (or determined or selected) from among the SCTP associations of the source backend server 430. For example, when there are 4,000 SCTP associations of the source backend server 430, four of the target backend servers 440 are identified, and it is identified that the SCTP associations are to be equally distributed, the transfer manager 410 may distribute 1,000 of 4,000 SCTP associations of the source backend server 430 to each target backend server 440

In an embodiment of the present disclosure, on receiving the message indicating the need for transferring SCTP associations and regarding SCTP association transfer information from the backend controller 420, the transfer manager 410 may perform MM-1 function for transmitting an SCTP association transfer initiation message to the identified target backend server 440.

For example, the SCTP association transfer initiation message transmitted by the transfer manager 410 may include required information and protocol components for the SCTP association transfer. The SCTP association transfer initiation message may include at least one of information about an SCTP association set identified by the transfer manager, current SCTP association state information, information about an identity (e.g., an IP address or port number) of the source backend server 430, which is the old backend server, information about an identity (e.g., an IP address or port number) of the target backend server 440, association parameter configuration information, security information, session and transaction information and transfer request timestamp information.

In an embodiment of the present disclosure, on receiving the SCTP association transfer initiation message, the target backend server 440 may perform an operation of initiating the transfer of SCTP associations in response to the reception of the SCTP association transfer initiation message from the transfer manager 410.

For example, on receiving the SCTP association transfer initiation message, each target backend server 440 may forward the SCTP association initiation message (or SCTP INIT message) for the received SCTP association set to all the connected clients in 405. Specifically, each target backend server 440 may transmit the SCTP association initiation message for the SCTP association set to the load balancer 100 of FIG. 2, and the load balancer 100 that has received the SCTP association initiation message may transmit the SCTP association initiation message to a client about to perform an SCTP association with the target backend server 440. The load balancer 100 may transmit the SCTP association initiation message to the client 200 about to perform the SCTP association with the target backend server 440 based on the database 110 of the load balancer 100.

When the client 200 receives the SCTP association initiation message, the SCTP association may be established between the client 200 and the target backend server 440.

In an embodiment of the present disclosure, when recognizing the SCTP association initiation message of the target backend server 440, the transfer manager 410 may recognize the SCTP association initiation message as a reinitiation message. Furthermore, the transfer manager 410 may transmit a message to update the database 110 of the load balancer 100 in 406 based on the recognized reinitiation message. For example, the transfer manager 410 may update both the SCTP association and NAT information relating to the SCTP association stored in the database 110 from the information for the source backend server 430 to information for the target backend server 440.

In an embodiment of the present disclosure, on receiving the SCTP association initiation message, the client 200 may transmit an ACK message (or reply message) of SCTP association initiation to the target backend server 440 in 407 in response to the SCTP association initiation message. When the target backend server 440 receives the ACK message of the SCTP association initiation, the procedure for transferring the SCTP association of the source backend server 430 to the target backend server 440 is all done, and data communication may be performed between the client 200 and the target backend server 440 according to the transferred SCTP association. For example, the target backend server 440 may receive a request to process data from the client 200 and perform an operation of processing the data.

In an embodiment of the present disclosure, when receiving a packet through the old SCTP association, the transfer manager 410 may discard the packet. Accordingly, the transfer manager 410 may reduce traffic that may otherwise be unnecessarily processed in the local network.

As described above, when a large number of SCTP associations need to be transferred from the source backend server 430 to the target backend server 440 according to BC-1, BC-2, BC-3, MM-1 and MM-2 operations of the transfer manager 410 and the backend controller 420, the large number of SCTP associations may be transferred quickly and efficiently.

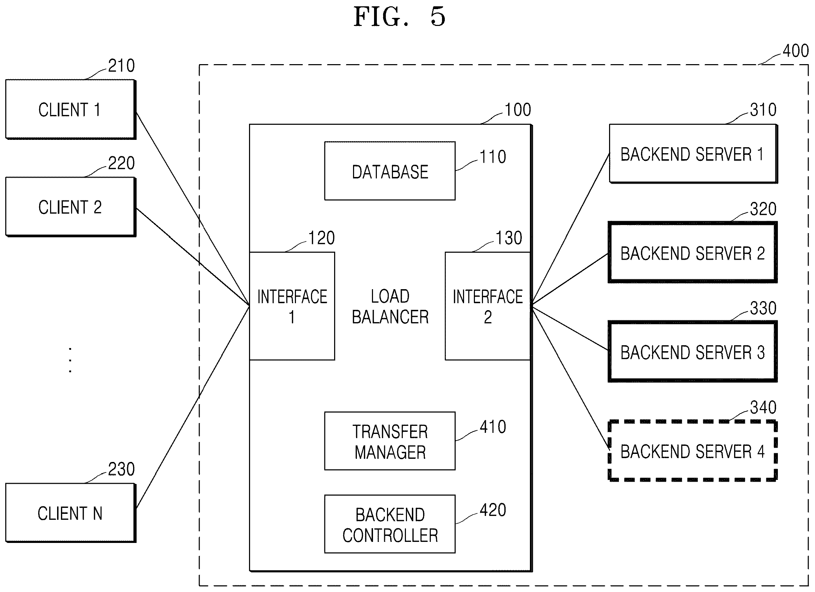

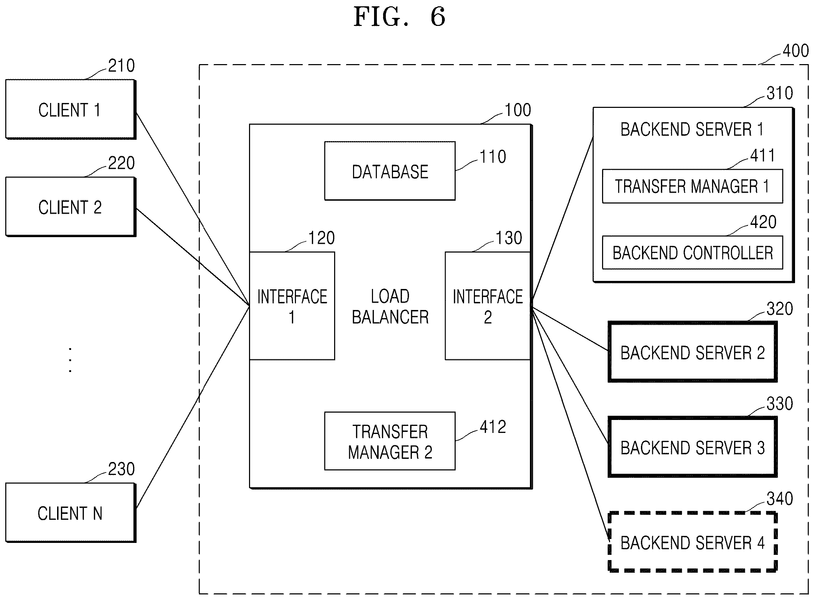

In FIGS. 2 to 4, an example where the transfer manager 410 is located in the load balancer 100 and the backend controller 420 is located outside the load balancer 100 is described. In the following description in connection with FIGS. 5 and 6, an occasion when the transfer manager 410 and the backend controller 420 are located in the load balancer 100 or when a portion of the function of the transfer manager 410 and the backend controller 420 are located in the backend server and the other portion of the function of the transfer manager 410 is performed in the load balancer 100.

FIG. 5 illustrates clients, a network, and an electronic device for transferring SCTP associations between the clients and backend servers that is located in a load balancer, in an embodiment of the present disclosure.

In describing FIG. 5, descriptions overlapping those of any one of FIGS. 1 to 4 may not be repeated.

Referring to FIG. 5, the plurality of clients 210, 220, ..., 230 may be connected to the load balancer 100 to perform data communication with the plurality of backend servers 310, 320, 330 and 340 included in the local area network 400 through SCTP associations. Although the load balancer 100 is described as being included in the local area network 400 in the present disclosure for convenience of explanation, the position of the load balancer 100 is not limited thereto. For example, the load balancer 100 may be located outside the local area network 400, and only a portion of the load balancer 100 may be located in the local area network 400. For example, only interface 2 130 of the load balancer 100 may be located in the local area network 400 while the database 110 and interface 1 120 of the load balancer 100 may be located outside the local area network 400.

In an embodiment of the present disclosure, the backend controller 420 may perform BC-1 function (or operation) for receiving, from backend server 1 310, backend server 2 320, backend server 3 330 and backend server 4 340, status information of the backend server including at least one of SCTP association status information, information about CPU usage, information about memory usage, an abnormal state of the backend server and whether the backend server has a failure. For example, the status information of the backend server received by the backend controller 420 may be received periodically or aperiodically.

For example, backend server 1 310, backend server 2 320, backend server 3 330 and backend server 4 340 may forward the status information of each backend server through interface 2 130 of the load balancer 100, and the status information of each backend server may be forwarded to the backend controller 420. It is not limited thereto. For example, the status information of each backend server may be forwarded to the backend controller 420 through another interface of the load balancer 100.

In an embodiment of the present disclosure, when each of backend server 1 310, backend server 2 320, backend server 3 330 and backend server 4 340 has a fault, detects memory usage equal to or more than a certain threshold or is in an environment where the server is unable to operate, it may perform BC-2 function that instructs to terminate the service being provided to the client associated in SCTP.

Hence, when having a problem, each backend server may detect the problem and terminate the service, and send SCTP association transfer information to the backend controller 420 of the load balancer 100 to perform a transfer operation of transferring its SCTP associations. Specifically, when backend server 4 340 has a problem and is thus unable to provide a service to a client, when backend server 4 340 needs to be restarted after terminated, when backend server 4 340 needs to be repaired and is thus determined as being unavailable for a long time or when traffic equal to or more than certain reference traffic occurs, the abnormal state of backend server 4 340 may be forwarded to the backend controller 420 of the load balancer 100. In this case, the backend controller 420 may not separately identify (or determine or select) the source backend server from which SCTP associations are to be transferred.

In an embodiment of the present disclosure, the backend controller 420 may perform BC-3 function for forwarding the status information of backend server 1 310, backend server 2 320 and backend server 3 330 other than backend server 4 340 to the transfer manager 410.

In an embodiment of the present disclosure, the transfer manager 410 may identify a target backend server to which the SCTP associations of backend server 4 340 are to be transferred, based on the information forwarded from the backend controller 420. For example, the transfer manager 410 may identify (or determine, select, or set) a target backend server to which the SCTP associations of backend server 4 340 are to be transferred, according to a load distribution algorithm based on information about CPU usage, memory usage and amounts of traffic of backend server 1 310, backend server 2 320 and backend server 3 330. There may be one, two or more target backend servers.

The load distribution algorithm may include at least one of a random, Hashing, round-robin algorithm, a least connections algorithm, or a resource-based algorithm (e.g., an algorithm based on CPU usage or memory usage), or a well-known load distribution algorithm may be used. For example, the well-known load distribution algorithm may be an algorithm to distribute traffic based on information about an amount of traffic allocated for each backend server.

In an embodiment, the transfer manager 410 may distribute loads based on the number of SCTP associations of each backend server. For example, when the information received by the transfer manager 410 from the backend controller 420 is about the number of SCTP associations of each backend server, the number of SCTP associations of backend server 1 310 is 5000, the number of SCTP associations of backend server 2 320 is 5000, and the number of SCTP associations of backend server 3 330 is 2000, the transfer manager 410 may identify backend server 3 330 having the smallest number of SCTP associations as a second backend server, the target backend server.

In an embodiment, the transfer manager 410 may distribute the loads based on CPU usage of each backend server. For example, when the information received from the backend controller 420 is about CPU usage of each backend server, the CPU usage of backend server 1 310 is 5%, the CPU usage of backend server 2 320 is 4%, and the CPU usage of backend server 3 330 is 2%, the transfer manager 410 may identify (or determine, select, or set) backend server 3 330 having the least CPU usage as the second backend server, the target backend server.

For convenience of explanation, the transfer manager 410 is described in a way of only one piece of status information to identify the target backend server, but is not limited thereto. For example, the transfer manager 410 may identify (or determine, select, or set) the target backend server by taking into account both the number of SCTP associations and the CPU usage. For example, the transfer manager 410 may identify (or determine, select, or set) a backend server by placing a priority or weight on each information.

For example, when the information received by the transfer manager 410 from the backend controller 420 is about the number of SCTP associations of each backend server and CPU usage of each backend server, and there is a backend server having less than 3% of CPU usage, the transfer manager 410 may identify (or determine, select, or set) the backend server as the target backend server regardless of the number of SCTP associations of the backend server.

For example, assume that the CPU usage of backend server 1 310 is 5%, the number of SCTP associations of backend server 1 310 is 1,000, the CPU usage of backend server 2 320 is 4%, the number of SCTP associations of backend server 2 320 is 1000, the CPU usage of backend server 3 330 is 1%, and the number of SCTP associations of backend server 3 330 is 3,000. In this case, the transfer manager 410 may identify (or determine, select, or set) backend server 3 330 having the most number of SCTP associations but having the least CPU usage as the target backend server.

In an embodiment, when two or more target backend servers are identified, the transfer manager 410 may divide SCTP associations of backend server 4 340, which is the source backend server, into multiple sets, and transfer the divided SCTP sets to the target backend servers to which the SCTP associations are to be transferred.

In an embodiment, the transfer manager 410 may distribute loads based on the number of SCTP associations of each backend server. For example, assume that the information received from the backend controller 420 is about the number of SCTP associations of each backend server, the number of SCTP associations of backend server 1 310 is 5000, the number of SCTP associations of backend server 2 320 is 3000, the number of SCTP associations of backend server 3 330 is 2000, and the number of SCTP associations of backend server 4 is 5000. In this case, the transfer manager 410 may identify backend server 2 320 and backend server 3 330 having a relatively small number of SCTP associations as target backend servers.

In this case, the transfer manager 410 may classify 3000 of 5000 SCTP associations of backend server 4 340, the source backend server into a first set and 2000 SCTP associations into a second set, and distribute the first set of SCTP associations to backend server 3 330 and the second set of SCTP associations to backend server 2 320. When the distribution of the SCTP associations of backend server 4 340 is completed, each of backend server 1 310, backend server 2 320 and backend server 3 330 has 5,000 SCTP associations, so that concentration of the SCTP associations in one backend server may be avoided.

In an embodiment, the transfer manager 410 may distribute the loads based on CPU usage of each backend server. For example, when the information received from the backend controller 420 is about CPU usage of each backend server, the CPU usage of backend server 1 310 is 5%, the CPU usage of backend server 2 320 is 4%, and the CPU usage of backend server 3 330 is 2%, the transfer manager 410 may identify backend server 2 320 and backend server 3 330 in low CPU usage order as target backend servers.

For convenience of explanation, the transfer manager 410 is described in a way of only one piece of status information to identify the target backend server, but is not limited thereto. For example, it is also possible that the transfer manager 410 identifies (or determines, selects, or sets) the target backend server by taking into account both the number of SCTP associations and the CPU usage. For example, the transfer manager 410 may identify (or determine, select, or set) a backend server by placing a priority or weight on each information.

For example, when the information received by the transfer manager 410 from the backend controller 420 is about the number of SCTP associations of each backend server and CPU usage of each backend server, and there is a backend server having less than 3% of CPU usage, the transfer manager 410 may identify (or determine, select, or set) the backend server as the target backend server regardless of the number of SCTP associations of the backend server.

For example, assume that the CPU usage of backend server 1 310 is 5%, the number of SCTP associations of backend server 1 310 is 1,000, the CPU usage of backend server 2 320 is 2%, the number of SCTP associations of backend server 2 320 is 2000, the CPU usage of backend server 3 330 is 1%, and the number of SCTP associations of backend server 3 330 is 3,000. In this case, the transfer manager 410 may identify (or determine, select, or set) backend server 2 320 and backend server 3 330 having a relatively large number of SCTP associations but having less than 3% of CPU usage as the target backend servers.

In the following description, assume that backend server 2 320 and backend server 3 330 are identified as target backend servers and that targets for source SCTP associations are client 1 210 and client 2 220.

In an embodiment, the transfer manager 410 may perform MM-1 function for forwarding an SCTP transfer initiation (or SCTP transfer INIT) message to backend server 2 320 and backend server 3 330.

For example, the SCTP association transfer initiation message transmitted by the transfer manager 410 may include required information and protocol components for the SCTP association transfer. Specifically, the SCTP association transfer initiation message may include at least one of SCTP association set information, current SCTP association state information, information about an identity (e.g., an IP address or port number) of source backend server 4 340, which is the old backend server, the source backend server, information about identities (e.g., IP addresses or port numbers) of backend server 2 320 and backend server 3 330, which are target backend servers, association parameter configuration information, security information, session and transaction information and transfer request timestamp information.

In an embodiment of the present disclosure, on receiving the SCTP association transfer initiation message, backend server 2 320 and backend server 3 330 may perform an operation of initiating SCTP associations in response to the reception of the SCTP association transfer initiation message from the transfer manager 410.

In an embodiment, after the SCTP association initiation message and a replay message to the SCTP association initiation are exchanged between the client that has been SCTP-associated with backend server 4 340 and the target backend server, the transferred SCTP association may be reinitiated. The transfer manager 410 may recognize (or identify) the time when the SCTP association initiation message or SCTP INIT message is delivered to the database 110 of the load balancer 100 as a time when the SCTP association is reinitiated, and from this time, the SCTP association and NAT information relating to the SCTP association of the database 110 may be updated.

For example, on receiving the SCTP association transfer initiation message, backend server 2 320 and backend server 3 330 may forward the SCTP association initiation message (or SCTP INIT message) for the received SCTP association set to all the connected clients. Specifically, backend server 2 320 and backend server 3 330 may transmit the SCTP association initiation message for the SCTP association set to the load balancer 100, and the load balancer 100 that has received the SCTP association initiation message may transmit the SCTP association initiation message to a client about to perform SCTP associations with backend server 2 320 and backend server 3 330. For example, the load balancer 100 may transmit the SCTP association initiation message to client 1 210 about to perform SCTP association with backend server 2 320 and client 2 220 about to perform SCTP association with backend server 3 330 by using the database 110 of the load balancer 100.

For example, when client 1 210 and client 2 220 receive the SCTP association initiation message, SCTP associations may be established between client 1 210 and client 2 220 and backend server 2 320 and backend server 3 330.

In an embodiment of the present disclosure, on receiving the SCTP association initiation message, client 1 210 and client 2 220 may transmit ACK messages (or reply messages) to SCTP association initiation to target backend servers, backend server 2 320 and backend server 3 330, respectively, in response to the SCTP association initiation message. When backend server 2 320 and backend server 3 330 receive the ACK messages to SCTP association initiation, the procedure for transferring the SCTP association of backend server 4 340 to backend server 2 320 and backend server 3 330 is completed, and data communication may be performed between client 1 210 and client 2 220 and backend server 2 320 and backend server 3 330 according to the transferred SCTP associations. Specifically, backend server 2 320 and backend server 3 330 may receive data processing requests from client 1 210 and client 2 220, respectively, and perform an operation of processing the data.

In an embodiment of the present disclosure, as the backend controller 420 and the transfer manager 410 are located in the load balancer 100, the load balancer 100 is able to migrate SCTP associations according to connection relationship of the load balancer 100 without the need for extra data processing and connection, thereby attaining various effects including an effect of efficiently managing infrastructure resources.

FIG. 6 illustrates clients, a network, and an electronic device for transferring SCTP associations between the clients and backend servers, whose functions are distributed in a load balancer and the backend server, according to an embodiment of the present disclosure.

In describing FIG. 6, descriptions overlapping those of FIGS. 1 to 5 may not be repeated.

Referring to FIG. 6, the plurality of clients 210, 220, ..., 230 may be connected to the load balancer 100 to perform data communication with the plurality of backend servers 310, 320, 330 and 340 included in the local area network 400 through SCTP associations. Although the load balancer 100 is described as being included in the local area network 400 in the present disclosure for convenience of explanation, the position of the load balancer 100 is not limited thereto. For example, the load balancer 100 may be located outside the local area network 400, and only a portion of the load balancer 100 may be located in the local area network 400. For example, only interface 2 130 of the load balancer 100 may be located in the local area network 400 while the database 110 and interface 1 120 of the load balancer 100 may be located outside the local area network 400.

In an embodiment of the present disclosure, transfer manager 2 412 and the backend controller 420 may be one of the plurality of backend servers, a leader backend server. The leader backend server may perform some of the functions of the transfer manager 410 and backend controller 420 of FIG. 5. For example, among backend server 1 310, backend server 2 320, backend server 3 330 and backend server 4 340, backend server 1 310 may be the leader backend server.

In an embodiment of the present disclosure, the leader backend server may include the backend controller 420 for performing BC-1 and BC-3 functions and transfer manager 1 411 for performing MM-1 function. For example, the leader backend server may include the backend controller 420 for performing BC-1 and BC-3 functions while performing data processing for a client and transfer manager 1 411 for performing MM-1 function.

For example, backend server 1 310 may perform BC-1 function (or operation) for receiving, from backend server 2 320, backend server 3 330 and backend server 4 340, status information of the backend server including at least one of SCTP association status information, information about CPU usage, information about memory usage, an abnormal state of the backend server and whether the backend server has a failure. Furthermore, backend server 1 310, the leader backend server may obtain status information of the backend server including at least one of its SCTP association status information, information about CPU usage, information about memory usage, an abnormal state of the backend server and whether the backend server has a failure. Moreover, the status information of the backend server may be obtained by backend server 4 periodically or aperiodically.

Furthermore, in an embodiment of the present disclosure, when each of backend server 1 310, backend server 2 320, backend server 3 330 and backend server 4 340 has a fault, detects memory usage equal to or more than a certain threshold or is in an environment where the server is unable to operate, it may detect it for itself and perform BC-2 function that instructs to terminate the service being provided to the client associated in SCTP.

When there is a problem in each backend server, the backend server may detect the problem and terminate the service, and send SCTP association transfer information to the backend controller 420 of backend server 1 310, the leader backend server to perform a transfer operation of transferring its SCTP associations. Specifically, when backend server 4 340 has a problem and is thus unable to provide a service to a client, when backend server 4 340 needs to be restarted after terminated, when backend server 4 340 needs to be repaired and is thus determined as being unavailable for a long time or when traffic equal to or more than certain reference traffic occurs, backend server 4 340 may forward the abnormal state of backend server 4 to the leader backend server, backend server 1 310. In this case, the backend controller 420 of the leader backend server, backend server 1 310 may not separately identify (or determine or select) the source backend server from which SCTP associations are to be transferred.

In an embodiment of the present disclosure, the backend controller 420 of backend server 1 310 may perform BC-3 function for forwarding the status information of backend server 1 310, backend server 2 320 and backend server 3 330 other than backend server 4 340 to transfer manager 1 411 of backend server 1 310.

In an embodiment of the present disclosure, transfer manager 1 411 may identify a target backend server to which the SCTP associations of backend server 4 340 are to be transferred, based on the information forwarded from the backend controller 420. For example, transfer manager 1 411 may identify (or determine, select, or set) a target backend server to which the SCTP associations of backend server 4 340 are to be transferred, according to a load distribution algorithm based on information about CPU usages, memory usages and amounts of traffic of backend server 1 310, backend server 2 320 and backend server 3 330. There may be one, two or more target backend servers.

The load distribution algorithm may include at least one of a random, Hashing, round-robin algorithm, a least connections algorithm, or a resource-based algorithm (e.g., an algorithm based on CPU usage or memory usage), or a well-known load distribution algorithm may be used. For example, the well-known load distribution algorithm may be an algorithm to distribute traffic based on information about an amount of traffic allocated for each backend server.

In an embodiment, transfer manager 1 411 of backend server 1 may distribute loads based on the number of SCTP associations of each backend server. For example, when the information received by transfer manager 1 411 from the backend controller 420 is about the number of SCTP associations of each backend server, the number of SCTP associations of backend server 1 310 is 5000, the number of SCTP associations of backend server 2 320 is 5000, and the number of SCTP associations of backend server 3 330 is 2000, transfer manager 1 411 may identify backend server 3 330 having the smallest number of SCTP associations as the second backend server, the target backend server.

In an embodiment, transfer manager 1 411 may distribute the loads based on the CPU usage of each backend server. For example, when the information received by transfer manager 1 411 from the backend controller 420 is about CPU usage of each backend server, the CPU usage of backend server 1 310 is 5%, the CPU usage of backend server 2 320 is 4%, and the CPU usage of backend server 3 330 is 2%, transfer manager 1 411 may identify (or determine, select, or set) backend server 3 330 having the least CPU usage as the second backend server, the target backend server.

For convenience of explanation, transfer manager 1 411 is described in a way of using only one piece of status information to identify the target backend server, but is not limited thereto. For example, transfer manager 1 411 may identify (or determine, select, or set) the target backend server by taking into account both the number of SCTP associations and the CPU usage. For example, transfer manager 1 411 may identify (or determine, select, or set) a backend server by placing a priority or weight on each information.

For example, when the information received by transfer manager 1 411 from the backend controller 420 is about the number of SCTP associations of each backend server and CPU usage of each backend server, and there is a backend server having less than 3% of CPU usage, transfer manager 1 411 may identify (or determine, select, or set) the backend server as the target backend server regardless of the number of SCTP associations of the backend server.

For example, assume that the CPU usage of backend server 1 310 is 5%, the number of SCTP associations of backend server 1 310 is 1,000, the CPU usage of backend server 2 320 is 4%, the number of SCTP associations of backend server 2 320 is 1000, the CPU usage of backend server 3 330 is 1%, and the number of SCTP associations of backend server 3 330 is 3,000. In this case, transfer manager 1 411 may identify (or determine, select, or set) backend server 3 330 having the most number of SCTP associations but having the least CPU usage as the target backend server.

In an embodiment, when two or more target backend servers are identified, the transfer manager 410 may divide SCTP associations of backend server 4 340, which is the source backend server, into multiple sets, and transfer the divided SCTP sets to the target backend servers to which the SCTP associations are to be transferred.

In the following description, assume that backend server 2 320 and backend server 3 330 are identified as target backend servers and that targets for source SCTP associations are client 1 210 and client 2 220.

In an embodiment, when transfer manager 1411 identifies backend server 2 320 and backend server 3 330 as the target backend servers, transfer manager 1 411 may perform SCTP transfer by forwarding an SCTP transfer initiation (or SCTP transfer INIT) message to backend server 2 320 and backend server 3 330.

In an embodiment of the present disclosure, the load balancer 100 may include transfer manager 2 412 that performs MM-2 function. For example, transfer manager 2 412 of the load balancer 100 may identify (or determine, select or set) a reinitiated SCTP association, and perform MM-2 function for updating the SCTP association and NAT information relating to the SCTP association stored in the database 110 into a transferred SCTP association state. For example, when a message for initiating an SCTP association stored in the database 110 of the load balancer 100 occurs, the transfer manager 410 may recognize the SCTP transfer initiation message as a message for reinitiating the SCTP association and update both the SCTP association and NAT information relating to the SCTP association stored in the database 110.

The SCTP association initiation message may be a message indicating that SCTP association transfer to backend server 2 320 and backend server 3 330 is completed and that SCTP associations between client 1 210 and client 2 220 and backend server 2 320 and backend server 3 330 have been initiated.

In an embodiment, after the SCTP association initiation message and the reply message to SCTP association initiation are exchanged between client 1 210 and client 2 220 that have been SCTP-associated with backend server 4 340, and backend server 3 330, which are the target backend servers, the transferred SCTP association may be reinitiated. Transfer manager 2 412 may recognize (or identify) the time when the SCTP association initiation message or SCTP INIT message is delivered to the database 110 of the load balancer 100 as a time when the SCTP association is reinitiated, and from this time, the SCTP association and NAT information relating to the SCTP association of the database 110 may be updated.

For example, on receiving the SCTP association transfer initiation message, backend server 2 320 and backend server 3 330 may forward the SCTP association initiation message (or SCTP INIT message) for the received SCTP association set to all the connected clients. For example, backend server 2 320 and backend server 3 330 may transmit the SCTP association initiation message for the SCTP association set to the load balancer 100, and the load balancer 100 that has received the SCTP association initiation message may transmit the SCTP association initiation message to a client about to perform SCTP associations with backend server 2 320 and backend server 3 330. The load balancer 100 may transmit the SCTP association initiation message to client 1 210 about to perform SCTP association with backend server 2 320 and client 2 220 about to perform SCTP association with backend server 3 330 by using the database 110 of the load balancer 100.

In an embodiment of the present disclosure, when client 1 210 and client 2 220 receive the SCTP association initiation message, SCTP associations may be established between client 1 210 and client 2 220 and backend server 2 320 and backend server 3 330.

In an embodiment of the present disclosure, on receiving the SCTP association initiation message, client 1 210 and client 2 220 may transmit ACK messages (or reply messages) to SCTP association initiation to target backend servers, backend server 2 320 and backend server 3 330, respectively, in response to the SCTP association initiation message. When backend server 2 320 and backend server 3 330 receive the ACK messages to SCTP association initiation, the procedure for transferring the SCTP association of backend server 4 340 to backend server 2 320 and backend server 3 330 is completed, and data communication may be performed between client 1 210 and client 2 220 and backend server 2 320 and backend server 3 330 according to the transferred SCTP associations. Backend server 2 320 and backend server 3 330 may receive data processing requests from client 1 210 and client 2 220, respectively, and perform an operation of processing the data.

In an embodiment of the present disclosure, when receiving a packet through the old SCTP association of backend server 4 340, transfer manager 2 412 may discard the packet. Accordingly, transfer manager 2 412 may reduce traffic that may otherwise be unnecessarily processed in the local network.

In an embodiment of the present disclosure, as transfer manager 2 412 is located in the load balancer 100 and transfer manager 1 411 and the backend controller 420 are located in the leader backend server, the SCTP association may be transferred without the need for extra communication equipment, thereby attaining various effects including an effect of efficiently managing infrastructure resources.

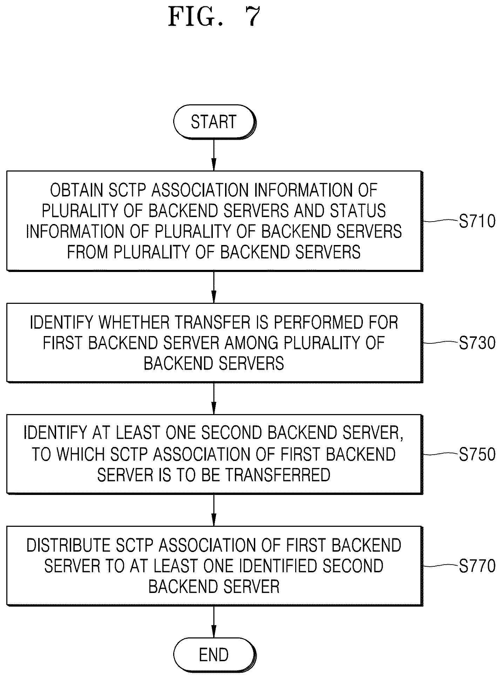

FIG. 7 is a flowchart illustrating a method of transferring an SCTP association, according to an embodiment of the present disclosure.

Referring to FIG. 7, an electronic device according to an embodiment of the present disclosure may obtain SCTP association information of a plurality of servers and status information of a plurality of backend servers from the plurality of backend servers in operation S710.

For example, the SCTP association information of the plurality of servers may include the number of SCTP associations of the plurality of servers. For example, the status information may include at least one of information about CPU usages of the plurality of backend servers, information about memory usages of the plurality of backend servers, information about amounts of traffic of the plurality of backend servers and whether the plurality of backend servers have a fault. For example, the SCTP association information may include the number of SCTP associations of each backend server, IP address information of each backend server, port number information, SCTP configuration setting information, security setting information and system resource information.

For example, the electronic device may receive the SCTP association information or status information from the plurality of backend servers periodically or aperiodically.

In operation S730, the electronic device may identify whether transfer is performed for a first backend server among the plurality of backend servers.

For example, the electronic device may identify (or recognize or determine) that there is a problem in a backend server whose CPU usage is equal to or larger than a certain threshold among the plurality of backend servers, and identify (or determine) the backend server as the first backend server.

For example, when the electronic device identifies through the SCTP association information or status information of each backend server that all the backend servers have no fault or too much traffic or resources are not concentrated in very few of backend servers, the electronic device may not perform an additional operation. In this case, the electronic device may receive the SCTP association information or status information from the plurality of backend servers periodically or aperiodically again, and at each reception, identify (or determine) whether to transfer SCTP associations.

Furthermore, the electronic device according to an embodiment may transmit a service termination request message to the first backend server when identifying that the transfer of SCTP associations of the first backend server is required.

In operation 750, the electronic device may identify at least one second backend server to which the SCTP associations of the first backend server are to be transferred.

Furthermore, in an embodiment of the present disclosure, the second backend server may be identified (or selected or determined) as the at least one target backend server based on the message indicating the need for transferring SCTP associations and a message regarding SCTP association transfer information. The at least one identified second backend server may be one backend server or a plurality of backend servers. For example, the number of target backend servers 440 may be identified (or determined or selected) by the backend controller 420 or determined in advance.

In operation 770, the electronic device may distribute the SCTP associations of the first backend server to the at least one identified second backend server.

In an embodiment of the present disclosure, the electronic device may divide (or classify) the SCTP associations into at least one SCTP association set. For example, based on status information of the at least one second backend server, at least one SCTP association set of the SCTP associations of the first backend server may be identified (or determined or selected). For example, when the first backend server has 4,000 SCTP associations, four of the second backend servers are identified, and it is identified that the SCTP associations are to be equally distributed, the electronic device may distribute 4,000 SCTP associations of the first backend server to the second backend servers, 1,000 each.

In an embodiment of the present disclosure, the electronic device may discard packets generated in the SCTP associations of the first backend server. For example, when the transfer of SCTP associations from the first backend server to the at least one backend server is completed, packets generated in the SCTP association of the first backend server, which is no longer required, may be discarded.

In an embodiment of the present disclosure, the electronic device may recognize an SCTP association initiation message transmitted to a client corresponding to the SCTP association. Furthermore, the electronic device may update SCTP association information or NAT information regarding the SCTP association in the database of the load balancer, based on the recognized SCTP association initiation message.

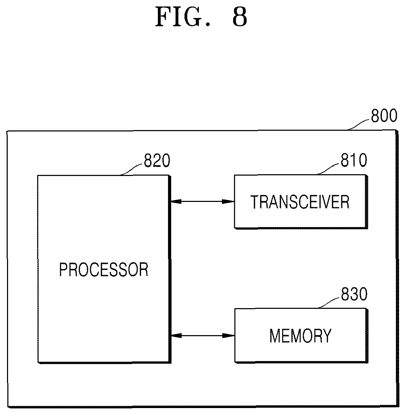

FIG. 8 illustrates an electronic device for transferring SCTP associations, according to an embodiment of the present disclosure.

In describing FIG. 8, descriptions overlapping those of FIGS. 1 to 7 may not be repeated.

Referring to FIG. 8, the electronic device 800 according to an embodiment may include a transceiver 810, a processor 820 and memory 830 In various embodiments, the electronic device is not limited to the components shown in FIG. 8, and may include an additional component not shown in FIG. 8 or some of the components shown in FIG. 8 may be omitted.

Furthermore, according to an embodiment, the electronic device 800 may perform the functions of the transfer manager and backend controller as described in connection with FIGS. 2 to 7.

For example, although the electronic device 800 is shown in FIG. 8 as controlling the transfer of SCTP associations according to an operation of the processor 820, the operation of the processor 820 may be implemented in software stored in the memory 830.

Furthermore, although not shown in FIG. 8, the electronic device 800 may further include an input module for receiving an input of a distribution criterion for identifying a method of distributing SCTP associations from the user, and an output module for outputting a result of distributing the SCTP associations.

The operations of the processor 820 may also be implemented in a software module stored in the memory 830. For example, the software module may be stored in the memory 830, and operated by being executed by the processor 820.

The transceiver 810 may support establishment of a wired or wireless communication channel between the electronic device 800 and an external electronic device and communication through the established communication channel. According to an embodiment, the transceiver 810 may transmit or receive information from a plurality of backend servers through the wired or wireless communication.

In an embodiment, data received by the transceiver 810 may be status information of the plurality of backend servers. The status information of the backend server may include at least one of information about CPU usages of the plurality of backend servers, information about memory usages of the plurality of backend servers, information about amounts of traffic of the plurality of backend servers and whether the plurality of backend servers have a fault.

In various embodiments, the transceiver 810 may include a wireless communication module (e.g., a cellular communication module, a short-range communication module, or a GNSS communication module) or a wired communication module (e.g., a LAN communication module or a power line communication module), and use one of the communication modules to communicate with the external electronic device over a short-range communication network (e.g., Bluetooth, Wi-Fi direct, or IrDA) or a long-range communication network (e.g., a cellular network, the Internet, or a computer network (e.g., a LAN or WAN)).

Alternatively, in various embodiments, the transceiver 810 may communicate with modules in the load balancer through cable connection in the load balancer or through internal buses.

The processor 820 may be electrically connected to components included in the electronic device to perform computation or data processing for controlling and/or communicating of the components included in the electronic device. In an embodiment, the processor 820 may load an instruction or data received from at least one of the other components to the memory 830, process it, and store a resultant data in the memory 830.

Although the processor 820 is expressed in FIG. 8 as the single processor 820 for convenience of explanation, functions of at least some of the modules included in each unit, into which functions of the electronic device are conceptually divided, may be implemented by a plurality of processors. In this case, the processor 820 does not operate as the single processor 820, but may be provided in a plurality of processors each implemented in separate hardware to perform each operation. It is not limited thereto.

The memory 830 may be electrically connected to the processor 820, and may store instructions or data related to operations of the components included in the electronic device. According to various embodiments, the memory 830 may store instructions for the operations or a distribution criterion to distribute SCTP associations.

In an embodiment, when the modules, into which functions of the electronic device 800 are conceptually divided, are implemented in software to be executed by the processor 820, the memory 830 may store instructions to execute the software module.

In an embodiment, a method of transferring SCTP associations of a plurality of backend servers in a radio access network system may include obtaining SCTP association information of the plurality of backend servers and status information of the plurality of backend servers from the plurality of backend servers; identifying whether to perform transfer for a first backend server among the plurality of backend servers based on the obtained SCTP association information and status information; identifying at least one second backend server, to which SCTP associations of the first backend server are to be transferred, based on the identifying of whether the transfer is required, and the obtained SCTP association information and status information; and distributing the SCTP associations of the first backend server to the at least one identified second backend server based on a certain distribution criterion.

The method may further include transmitting a service termination request message to the first backend server when the identifying of whether to perform transfer indicates that the SCTP associations of the first backend server need to be transferred.

The method may further include discarding a packet generated in the SCTP associations of the first backend server.

The method may further include recognizing an SCTP association initiation message transmitted to a client corresponding to the SCTP association; and updating SCTP association information or network address translation (NAT) information relating to the SCTP association in a database of a load balancer, based on the SCTP association initiation message.

The SCTP association information may include information about numbers of SCTP associations of the plurality of backend servers, information about Internet protocol (IP) addresses of the plurality of backend servers, information about port numbers of the plurality of backend servers and configuration setting information of the plurality of backend servers.

The status information may include at least one of information about CPU usages of the plurality of backend servers, information about memory usages of the plurality of backend servers, information about amounts of traffic of the plurality of backend servers and whether the plurality of backend servers have a fault.

The distribution criterion may include at least one of a random, Hashing, round-robin algorithm, a least connections algorithm, or a resource based algorithm.

The distributing of the SCTP associations of the first backend server to the at least one identified second backend server may include dividing the SCTP associations of the first backend server into at least one set based on the distribution criterion; and transmitting information about the at least one set to the at least one second backend server.

The method may be performed in a load balancer (100).

The method may be performed in one of the plurality of backend servers.

In an embodiment of the present disclosure, a computer-readable recording medium having a program recorded thereon to cause a computer to perform the method may be provided.

In an embodiment of the present disclosure, an electronic device may include memory (830) storing one or more instructions; and at least one processor (820) configured to execute the one or more instructions stored in the memory (830). The at least one processor may be configured to execute the one or more instructions to obtain SCTP association information of the plurality of backend servers and status information of the plurality of backend servers from the plurality of backend servers. The at least one processor may be configured to execute the one or more instructions to identify whether transfer for a first backend server among the plurality of backend servers is required based on the obtained SCTP association information and status information. The at least one processor may be configured to execute the one or more instructions to identify at least one second backend server, to which SCTP associations of the first backend server are to be transferred, based on the identifying of whether the transfer is required, and the obtained SCTP association information and status information. The at least one processor may be configured to execute the one or more instructions to distribute the SCTP associations of the first backend server to the at least one identified second backend server based on a certain distribution criterion.

In an embodiment, the at least one processor is configured to execute the one or more instructions to transmit a service termination request message to the first backend server, when the identifying of whether the transfer is required indicates that the SCTP associations of the first backend server need to be transferred.

In an embodiment, the at least one processor is configured to execute the one or more instructions to discard a packet generated in an SCTP association of the first backend server.

In an embodiment, the at least one processor is configured to execute the one or more instructions to recognize an SCTP association initiation message transmitted to a client corresponding to the SCTP association. The at least one processor is configured to execute the one or more instructions to update SCTP association information or network address translation (NAT) information regarding the SCTP association in a database of a load balancer, based on the SCTP association initiation message.

In an embodiment, the SCTP association information may include information about numbers of SCTP associations of the plurality of backend servers, information about Internet protocol (IP) addresses of the plurality of backend servers, information about port numbers of the plurality of backend servers and configuration setting information of the plurality of backend servers.

In an embodiment, the status information may include at least one of information about CPU usages of the plurality of backend servers, information about memory usages of the plurality of backend servers, information about amounts of traffic of the plurality of backend servers and whether the plurality of backend servers have a fault.

In an embodiment, the distribution criterion may include at least one of a random, Hashing, round-robin algorithm, a least connections algorithm, or a resource based algorithm.

In an embodiment, the at least one processor is configured to execute the one or more instructions to divide the SCTP associations of the first backend server into at least one set, based on the distribution criterion. The at least one processor is configured to execute the one or more instructions to transmit information about the at least one set to the at least one second backend server.

In an embodiment, the electronic device may be located in the load balancer.

In an embodiment, the electronic device may be located in one of the plurality of backend servers.

The machine-readable storage medium may be provided in the form of a non-transitory storage medium. The term 'non-transitory storage medium' may refer to a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a compact disc read only memory (CD-ROM)) or distributed directly between two user devices (e.g., smart phones) or online (e.g., downloaded or uploaded) through an application store. In the case of the online distribution, at least part of the computer program product (e.g., a downloadable app) may be at least temporarily stored or arbitrarily created in a storage medium that may be readable to a device such as a server of the manufacturer, a server of the application store, or a relay server.

## Claims

1. A method of transferring stream control transmission protocol (SCTP) associations of a plurality of backend servers in a radio access network system, the method comprising:
obtaining SCTP association information of the plurality of backend servers and status information of the plurality of backend servers from the plurality of backend servers (S710);
identifying whether to perform transfer for a first backend server among the plurality of backend servers based on the obtained SCTP association information and status information (S730);
identifying at least one second backend server, to which SCTP associations of the first backend server are to be transferred, based on the identifying of whether the transfer is required, and the obtained SCTP association information and status information (S750); and
distributing the SCTP associations of the first backend server to the at least one identified second backend server based on a certain distribution criterion (S770).

2. The method of claim 1, further comprising:
transmitting a service termination request message to the first backend server when the identifying of whether to perform the transfer indicates that the SCTP associations of the first backend server need to be transferred.

3. The method of claim 1 or claim 2, further comprising:
discarding a packet generated in the SCTP associations of the first backend server.

4. The method of any one of claims 1 to 3, further comprising:
recognizing an SCTP association initiation message transmitted to a client corresponding to the SCTP associations; and
updating SCTP association information or network address translation (NAT) information relating to the SCTP association in a database of a load balancer, based on the SCTP association initiation message.

5. The method of any one of claims 1 to 4, wherein the SCTP association information comprises information about numbers of SCTP associations of the plurality of backend servers, information about Internet protocol (IP) addresses of the plurality of backend servers, information about port numbers of the plurality of backend servers and configuration setting information of the plurality of backend servers.

6. The method of any one of claims 1 to 5, wherein the status information comprises at least one of information about CPU usages of the plurality of backend servers, information about memory usages of the plurality of backend servers, information about amounts of traffic of the plurality of backend servers and whether the plurality of backend servers have a fault.

7. The method of any one of claims 1 to 6, wherein the distribution criterion comprises at least one of a random, Hashing, round-robin algorithm, a least connections algorithm, or a resource based algorithm.

8. The method of any one of claims 1 to 7, wherein the distributing of the SCTP associations of the first backend server to the at least one identified second backend server comprises
dividing the SCTP associations of the first backend server into at least one set based on the certain distribution criterion; and
transmitting information about the at least one set to the at least one second backend server.

9. The method of any one of claims 1 to 8, wherein the method is performed in a load balancer (100).

10. The method of any one of claims 1 to 8, wherein the method is performed in one of the plurality of backend servers.

11. A computer-readable recording medium having a program recorded thereon to cause a computer to perform the method of any one of claims 1 to 10.

12. An electronic device (800) for performing transfer of stream control transmission protocol (SCTP) associations of a plurality of backend servers in a radio access network system, the electronic device (800) comprising:
memory (830) storing one or more instructions; and
at least one processor (820) configured to execute the one or more instructions stored in the memory (830),
wherein the at least one processor (820) is configured to
obtain SCTP association information of the plurality of backend servers and status information of the plurality of backend servers from the plurality of backend servers,
identify whether transfer for a first backend server among the plurality of backend servers is required, based on the obtained SCTP association information and status information,
identify at least one second backend server, to which SCTP associations of the first backend server are to be transferred, based on the identifying of whether the transfer is required, and the obtained SCTP association information and status information, and
distribute the SCTP associations of the first backend server to the at least one identified second backend server based on a certain distribution criterion.

13. The electronic device of claim 12, wherein the at least one processor (820) is configured to transmit a service termination request message to the first backend server when the identifying of whether to perform the transfer indicates that the SCTP associations of the first backend server need to be transferred.

14. The electronic device of claim 12 or claim 13, wherein the at least one processor (820) is configured to
recognize an SCTP association initiation message transmitted to a client corresponding to the SCTP associations, and
update SCTP association information or network address translation (NAT) information relating to the SCTP association in a database of a load balancer, based on the SCTP association initiation message.

15. The electronic device of any one of claims 12 to 14, wherein the at least one processor (820) is configured to
divide the SCTP associations of the first backend server into at least one set based on the certain distribution criterion, and
transmit information about the at least one set to the at least one second backend server.
